# EUROPÄISCHE PATENTSCHRIFT

(11) **EP 1 490 617 B1**
(45) Veröffentlichungstag und Bekanntmachung des Hinweises auf die Patenterteilung: **09.08.2006**
(21) Anmeldenummer: 03708236.9
(22) Anmeldetag: 14.03.2003
(51) Int. Cl.: F16L 3/04

(54) **BEFESTIGUNGSANORDNUNG FÜR EIN ROHRLEITUNGSNETZ**
FIXING ARRANGEMENT FOR A NETWORK OF PIPES
SYSTEME DE FIXATION POUR RESEAU DE CANALISATIONS

(30) Priorität: 28.03.2002 DE 10214681
(43) Veröffentlichungstag der Anmeldung: 29.12.2004
(73) Patentinhaber: GARDENA Manufacturing GmbH, 89079 Ulm (DE)
(72) Erfinder: SCHIEDT, Christoph, 88483 Burgrieden (DE); CLAUS, Ralf, 89134 Blaustein (DE)
(74) Vertreter: Patentanwälte Ruff, Wilhelm, Beier, Dauster & Partner
(86) Internationale Anmeldenummer: PCT/EP2003/002667
(87) Internationale Veröffentlichungsnummer: WO 2003/083339

(56) Entgegenhaltungen:
- US-A- 4 688 829
- US-A- 6 149 107

## Beschreibung

Die Erfindung betrifft eine Befestigungsanordnung für ein Rohrleitungsnetz, insbesondere für ein Bewässerungssystem für Pflanzen, mit Halterungen für die Rohrleitungen, die mit zur Befestigungsfläche offenen Klauen versehen sind, welche die Rohrleitung formschlüssig übergreifen und in einer Befestigungsebene halten nach dem Oberbegriff des Patentanspruches 1.

Aus der US 61 49 107 A ist eine solche Befestigungsanordnung bekannt, bei der tunnelförmig ausgestaltete Klauen vorgesehen sind, die mit seitlich abstehenden Flanschen an einer Wand oder auch am Boden befestigbar sind. Die Klauen weisen dort außer den in Richtung der Rohrleitungsachse verlaufenden Austrittsöffnungen noch eine weitere senkrecht dazu verlaufende Durchtrittsöffnung auf.

Bei diesem Stand der Technik sind die Klauen in ihren Abmessungen an die zu befestigenden Rohrleitungen angepasst, so dass sie die Rohrleitungen eng umfassen und sicher halten können. Überall da aber, wo Rohrleitungen unterschiedliche Durchmesser aufweisen können und beispielsweise eine Querschnittsreduzierung von einem Standardmaß von einem ½ Zoll auf 3/16 Zoll vorgenommen werden soll, können Klauen der bekannten Art nicht mehr eingesetzt werden.

Es sind auch Befestigungsanordnungen anderer Art bekannt (Gardena Micro-Drip-System). Bei dieser bekannten Anordnung sind Kunststoffleitungen von einer Wasserquelle aus zu Abzweigungen und Endverbrauchern gelegt, wobei über das Rohr greifende Halter mit Erdspießen die Rohre am Boden fixiert halten können. Zu diesem Zweck weisen die Halter am oberen Ende eines Erdspießes einen teiloffenen Ring auf, in welchen das Rohr eingeklipst werden kann. Bei der bekannten Anordnung sind auch Rohrhalter in der Form von Rohrklemmen vorgesehen, die das Rohr von oben umgreifen und auf festem Untergrund durch Dübel, Schrauben, Nägel oder dergleichen befestigt werden können.

Solche Befestigungsanordnungen sind nur geeignet, um gerade Rohrleitungsstücke ortsfest zu halten. Die Anordnung und Halterung von Verteilstücken oder von Abzweigungen zu Endverbrauchern ist nicht möglich.

Der Erfindung liegt die Aufgabe zugrunde, bei einer Befestigungsanordnung der eingangs genannten Art eine Ausgestaltung vorzuschlagen, mit der weitgehend Freiheit für die Anordnung und Befestigung von verschiedenen Teilen eines Rohrleitungsnetzes besteht.

Zur Lösung dieser Aufgabe wird bei einer Befestigungsanordnung der eingangs genannten Art vorgesehen, dass zum Anschluss der Rohrleitungen (3, 4) dienende Verbindungsstücke außen und die Klauen innen mit formschlüssig ineinander greifenden Strukturen versehen sind, um eine exakte Positionierung der Verbindungsstücke in den Klauen zu gewährleisten.

Durch diese Ausgestaltung können Verbindungsstücke verschiedener Abmessungen formschlüssig in die Klauen eingesetzt werden. Die Klauen sind daher nicht nur geeignet, Rohrleitungsabschnitte einrastend aufzunehmen, sondern sie können auch Verbindungsstücke verschiedener Art, beispielsweise T-förmige oder winkelförmig ausgebildete Verbindungsstücke, die als Formstücke vorliegen, aufnehmen und auf diese Weise zur Vernetzung der Rohrleitungen beitragen.

Dabei kann in einer Weiterbildung der Erfindung die Achse einer der weiteren Durchtrittsöffnungen in der Befestigungsebene oder in weiterer Ausgestaltung auch senkrecht zur Befestigungsebene verlaufen, wobei die Durchtrittsöffnung nach der von der Befestigungsfläche wegweisenden Seite offen ist. Diese Ausgestaltung nämlich ermöglicht auch die Anordnung von weiterführenden Leitungsstücken oder von Auslässen, die z.B. zu Sprühventilen führen und die auf diese Weise vertikal ausgerichtet auf der Befestigungsfläche angebracht werden können.

Die Klauen nach der Erfindung können ebenfalls mit Einsteckspießen für eine Erdbefestigung versehen sein. Sie können aber auch mit seitlich abstehenden Befestigungslaschen ausgerüstet sein zur Anordnung auf festem Untergrund.

Die Erfindung ist anhand von Ausführungsbeispielen in der Zeichnung dargestellt und wird im folgenden erläutert. Es zeigen:
- Fig. 1: eine perspektivische schematische Darstellung einer Befestigungsanordnung für ein Rohrleitungsnetz eines Bewässerungssystems,
- Fig. 2: die vergrößerte Darstellung einer Seitenansicht einer zur Befestigung von Rohrleitungen vorgesehenen Klaue, die mit einem Einsteckspieß zur Befestigung in der Erde versehen ist,
- Fig. 3: die Ansicht der Befestigungsklaue nach Fig. 2 in Richtung des Pfeiles III gesehen,
- Fig. 4: die Draufsicht auf die Klaue der Fig. 2 in Richtung des Pfeiles IV gesehen,
- Fig. 5: die Ansicht der Klaue der Fig. 2 von unten in Richtung des Pfeiles V nach Fig. 2 gesehen,
- Fig. 6: eine Befestigungsklaue anderer Art mit einer seitlich von ihr abragenden Befestigungslasche in einer Darstellung ähnlich Fig. 2,
- Fig. 7: die Ansicht der Klaue der Fig. 6 in Richtung des Pfeiles VII gesehen,
- Fig. 8: den Schnitt durch die Klaue längs der Schnittlinie VIII-VIII in Fig. 7,
- Fig. 9: die Ansicht der Klaue der Fig. 6 in Richtung des Pfeiles IX gesehen,
- Fig. 10: die Draufsicht auf die Klaue nach Fig. 6 in Richtung des Pfeiles X gesehen,
- Fig. 11: eine perspektivische Darstellung der Klaue nach den Fig. 6 bis 10,
- Fig. 12: ein Verbindungsstück für Rohrleitungen, welches in den Klauen nach Fig. 1 bis 5 bzw. 6 bis 11 rastend aufgenommen werden kann,
- Fig. 13: ein T-Verbindungsstück für Rohrleitungen, das in den Klauen nach den vorher gezeigten Fig. aufnehmbar ist und
- Fig. 14: ein Winkelverbindungsstück.

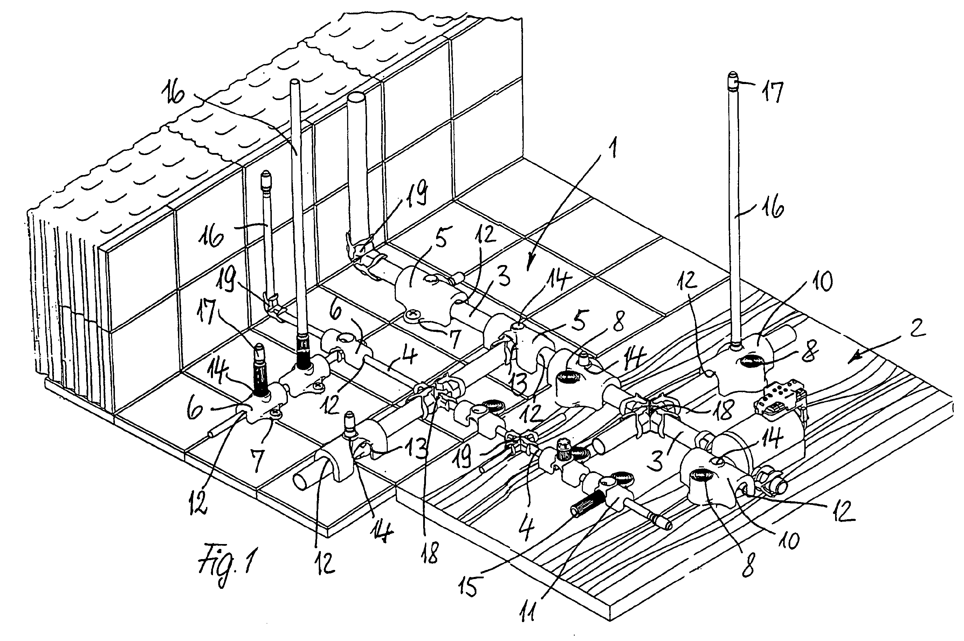

Die Fig. 1 zeigt mehr oder weniger schematisch eine Befestigungsanordnung für ein Gartenbewässerungssystem, wobei keine konkrete Bewässerungsanlage gezeigt ist, sondern nur die Möglichkeiten der Rohrleitungsverlegung und der Anordnung zusätzlicher Elemente, die durch die Erfindung möglich ist.

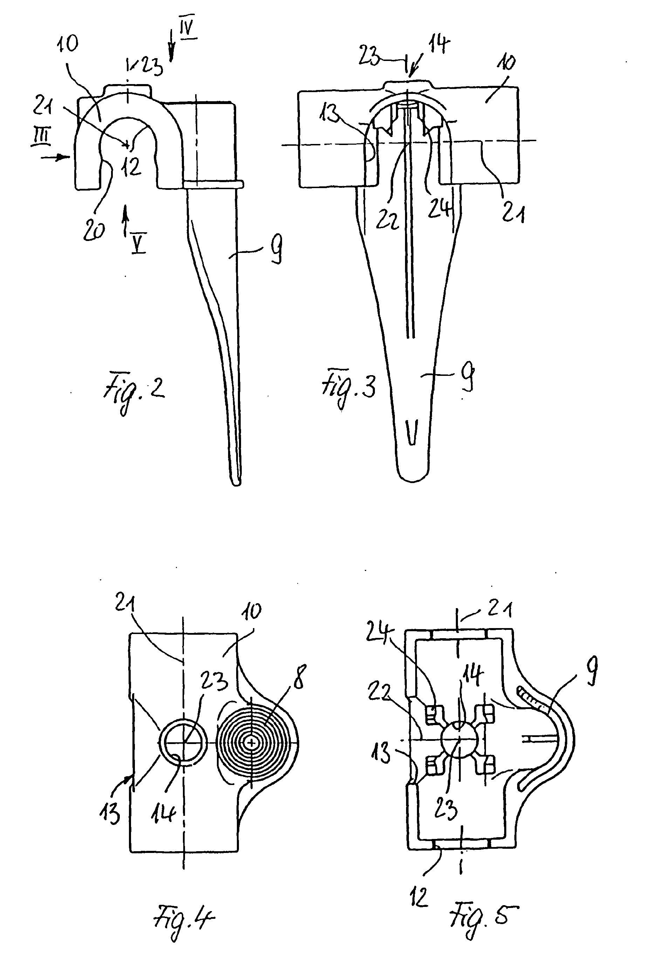

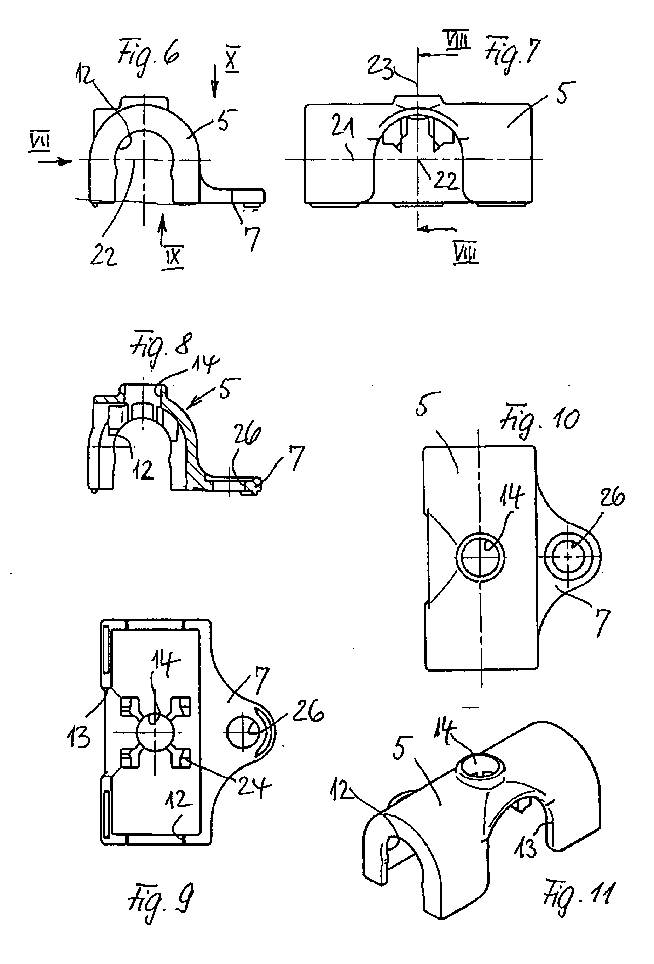

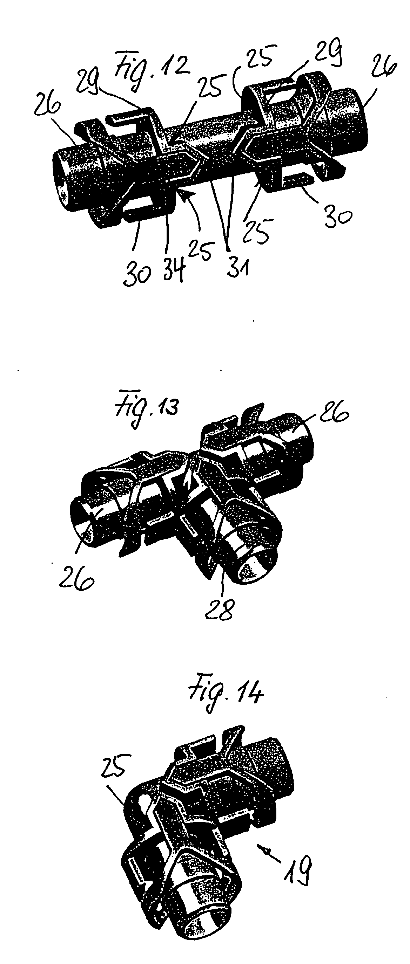

Fig. 1 zeigt schematisch einen Gartenbereich 1 mit festem Boden, beispielsweise den Bereich einer Terrasse und einen Gartenbereich 2, der vom natürlichen Erdboden begrenzt ist. Im ersten Bereich 1 sind zur Befestigung von Rohrleitungen 3 bzw. 4 Klauen 5 bzw. 6 vorgesehen, die unterschiedliche Abmessungen aufweisen. Die tunnelartig ausgebildeten Klauen 5 bzw. 6 besitzen unterschiedliche Durchgangsöffnungen, die sich an Rohrleitungen 3 mit größerem Durchmesser, beispielsweise an ½ Zollrohre bzw. an dünnere Kunststoffrohre, beispielsweise 3/16 Zoll im Durchmesser, anpassen. Diese Kunststoffrohre werden dabei in später noch näher zu erläuternder Weise in entsprechende Ausnehmungen an den Durchgangsöffnungen der Klauen 5 bzw. 6 eingerastet und so in ihrer Lage gehalten. Die Klauen 5 bzw. 6 sind Befestigungsklauen, die mit seitlich abstehenden Befestigungslaschen 7 versehen sind, wobei durch diese Laschen 7 Schrauben oder dergleichen zur Befestigung der Klauen am Boden des Bereiches 1 geführt werden können. Klauen dieser Art sind in den Fig. 6 bis 11 im einzelnen beschrieben. Befestigungsklauen 10 mit Druckplatten 8 und mit nach unten ragenden Erdspießen 9 sind im Bereich 2 zur Befestigung der Rohrleitungen 3 bzw. 4 vorgesehen und werden im einzelnen anhand der Fig. 2 bis 5 erläutert. Zu erkennen ist in Fig. 1, dass beide Arten von Befestigungsklauen 5, 6 bzw. 10, 11, die jeweils für Rohrleitungen 3, 4 unterschiedlicher Durchmesser einsetzbar sind, außer den Durchgangsöffnungen 12 für die Rohrleitungen 3 bzw. 4 auch noch mit zusätzlichen Öffnungen 13 und 14 versehen sind, die dazu ausgenützt werden können, entweder wiederum Rohrleitungen 3 bzw. 4 senkrecht zum ersten Rohrleitungsverlauf in einer zum Boden parallelen Befestigungsebene zu verlegen oder andere Elemente, wie beispielsweise Tropfausgänge 15 anzuschließen oder über die senkrecht zur Befestigung stehenden Öffnungen 14 nach oben gerichtete Austrittsrohre 16 zur Befestigung von Sprühdüsen 17 anzubringen. Auch hierauf wird im folgenden noch eingegangen werden.

Zu erkennen sind in Fig. 1 aber auch Verbindungsstücke 18 und 19, ebenfalls angepasst an die Durchmesser der Rohrleitungen 3 bzw. 4, die zum Anschluss verschiedener Rohrleitungen dienen und ebenfalls unterhalb der Klauen 5 bzw. 6 in einer Befestigungsebene gehalten werden können. Solche Verbindungsstücke sind in den Fig. 12 bis 14 aufgeführt. Sie sind außerdem mit Sicherungsanordnungen versehen, mit denen die aufgeschobenen Rohrleitungen an einem Abrutschen gehindert werden können. Die nachfolgende Beschreibung enthält auch hierzu Erläuterungen.

Die Fig. 2 bis 5 zeigen in einer vergrößerten Darstellung die Klauen 10, die im Erdbereich 2 zur Befestigung von Rohrleitungen verwendet werden. Die Klauen 11 entsprechen im wesentlichen der Ausgestaltung der Klauen 10. Lediglich die Abmessungen sind anders, um eine Anpassung an Rohrleitungen von 3/16 Zoll zu erreichen, während die gezeigten Klauen 10 beispielsweise für Halbzoll-Rohrleitungen geeignet sein sollen. Die Fig. 2 bis 5 lassen zunächst erkennen, dass die Klauen 10 selbst etwa in der Form eines Tunnels ausgebildet sind, wobei die Austrittsöffnungen 12 jeweils mit nach innen ragenden Vorsprüngen 20 versehen sind, die beim Einlegen der Rohrleitungen 3 zu einem Einrasten derselben in der Öffnung 12 führen. Die Klauen 10 sind ebenso wie die Rohrleitungen 3 oder 4 aus Kunststoff hergestellt, aus einem Material also, das eine gewisse elastische Verformung zulässt, um die jeweiligen Leitungen 3 - bzw. 4 - in den Öffnungen 12 formschlüssig zu lassen.

Die Fig. 3 und 5 zeigen aber auch, dass die Klauen 10 mit senkrecht zu der Achse 21 verlaufenden Öffnungen 13 bzw. 14 versehen sind, von denen die Öffnung 13 ebenfalls tunnelartig, die Öffnung 14 dagegen als eine kreisrunde Öffnung ausgebildet ist. Die Achse 21 verläuft dabei durch den Mittelpunkt des Kreisbogens, den die Öffnung 12 im oberen geschlossenen Bereich bildet. Die Achse 21 verläuft somit auch in der Befestigungsebene der Leitungen 3 (bzw. 4), weil die Rohrleitungen im kreisbogenförmigen Teil der Öffnung 12 entsprechend gehalten werden. Die Öffnung 13 liegt auf einer Achse 22, die senkrecht zur Achse 21 verläuft und in der von der Lage der Achse 21 bestimmten Befestigungsebene liegt. Die Öffnung 14 dagegen liegt auf einer Achse 23, die senkrecht zur Befestigungsebene verläuft.

Die Öffnung 13 besitzt keine Möglichkeit, um Rohre einrasten zu können. Die Innenseite der Klauen 10 ist jedoch im Bereich des Schnittpunktes der Achse 21 mit den Achsen 22 und 23 mit nach innen ragenden Strukturen 24 in der Form von Vorsprüngen, die symmetrisch zu der Achse 23 angeordnet sind, versehen. Wie später noch erläutert werden wird, dienen diese Strukturen dazu, formschlüssig in entsprechende Ausnehmungen oder Aussparungen 25 der Verbindungsstücke 18 einzugreifen, um diese positionsgenau innerhalb der Klauen 10 zu halten. Abzweigungen in der Form von Anschlussstutzen, wie sie noch anhand der Fig. 12 bis 17 beschrieben werden, werden daher sicher in der Öffnung 13 positionierbar. Die Öffnung 14 kann von vorneherein dem Durchmesser der Rohrleitungen 3 bzw. 4 angepasst werden, so dass entsprechende Stutzen eines Verteilerstückes oder andere Anschlussrohrteile wie jene, die in Fig. 1 mit 16 bezeichnet sind, sicher und fest in ihrer senkrechten Lage zur Befestigungsebene an den Klauen 10 gehalten werden können.

Die Fig. 6 bis 11 zeigen die Klauen 5, die zur Befestigung der Rohrleitungen auf festem Boden geeignet ausgebildet sind. Hier ist zum einen wiederum die Einrastöffnung 12 jeder Klaue 5 zu erkennen, die zur Achse 21 ausgerichtet ist. Diese Klauen 5 werden mit Hilfe der Laschen 7 am Boden befestigt, die Öffnungen 26 zum Durchführen von Schrauben, Nägeln oder dergleichen aufweisen. Für diese Laschen 5 gilt das gleiche, wie schon anhand der Fig. 2 bis 5 zu den Laschen 10 ausgeführt. Anders ist ausschließlich die Art der Befestigung der Klauen 5 am Untergrund.

Zu den Klauen 5 bzw. 10 kann grundsätzlich auch noch bemerkt werden, dass die tunnelartigen Gehäuse der Klauen innen Platz für verschiedene Kupplungskomponenten aufweisen. Zum einen können Verbindungsstücke aufgenommen werden, wie sie noch anhand der Fig. 12 bis 14 erläutert werden. Es kann beispielsweise ein T-Stück nach Fig. 13 zur Verbindung von drei Rohrenden unter einer solchen Klaue gehalten werden. Die innen vorgesehenen Strukturen 24 sind dann von Bedeutung, wenn an dem zusätzlichen Ausgang 13, wo keine Rastung vorgesehen ist, auch andere Elemente aus dem Gehäuse der Klaue herausragen können. In einem solchen Fall dienen die korrespondierenden Strukturen 24 zur Stabilisierung der Position der Verbindung innerhalb der Klaue. Dies ist dann wichtig, wenn die Rohrverbindung eine Querschnittsreduzierung von einem Standardmaß von einem halben Zoll auf das weitere Standardmaß 3/16 Zoll aufweist und der für Halbzollrohre ausgelegte Klauenhalter das 3/16 Zollrohr bzw. dessen Verbindungsabschnitt nicht eng umgreift. In diesem Fall fixieren die korrespondierenden Strukturen 24, 25 trotzdem die Lage des dünneren Rohrabschnittes innerhalb der Klaue. An den horizontalen Abschnitt kann auch bereits ein Tropfer oder dergleichen angeschlossen sein.

Der senkrecht zur Befestigungsfläche weisende zusätzliche Ausgang 14 ist deshalb besonders vorteilhaft, weil über ihn die geläufigen Tropfer, insbesondere aber auch Sprühdüsen wie beispielsweise die Düse 17 am Rohr 16 (Fig. 1) angeschlossen werden können. Dieses Verlängerungsrohr 16 ist kippsicher innerhalb der Öffnung 14 angeordnet.

Die Fig. 12 bis 14 zeigen nun Verbindungsstücke für die Kunststoffrohrleitungen. Diese Verbindungsstücke bzw. ihre Anschlussstutzen 26, 27, 28 sind jeweils auf die Abmessungen der Kunststoffrohrleitungen 3 bzw. 4 abgestimmt. Die Verbindungsstücke sind, worauf noch näher eingegangen werden wird, jeweils mit umlaufenden und profilierten Kragen 29 versehen, die jeweils mit axial abstehenden Ansätzen 30 und bei den gezeigten Ausführungsbeispielen auch mit pfeilartig zur Verbindungsmitte axial verlaufenden Absätzen 31 versehen, welche nach innen weisende Vertiefungen aufweisen, die dazu ausgenützt werden können, Sicherungseinrichtungen 32 mit ihren nach innen gerichteten Haken 33 einrasten zu lassen.

Die Fig. 12 bis 14 lassen auch die vielseitigen Möglichkeiten erkennen, wie Verbindungsstücke ausgebildet werden können. Die Fig. 12 zeigt dabei ein einfaches Durchgangsverbindungsstück. Fig. 13 ein Durchgangsverbindungsstück mit einem senkrecht abragenden Anschlussstutzen 27, der durch die Öffnung 14 der zugeordneten Klaue geführt werden kann. Fig. 14 zeigt ein Endverbindungsstück mit einem Abschluss.

## Patentansprüche

1. Befestigungsanordnung für ein Rohrleitungsnetz, insbesondere für ein Bewässerungssystem für Pflanzen, mit Halterungen für die Rohrleitungen (3, 4), die mit zur Befestigungsfläche (1, 2) offenen Klauen (5, 10) versehen sind, welche die Rohrleitungen (3, 4) formschlüssig übergreifen und in einer Befestigungsebene halten, wobei die Klauen (5, 10) außer mit den beiden in Richtung der Rohrleitungsachse (21) verlaufenden Austrittsöffnungen (12) noch mit mindestens einer weiteren Durchtrittsöffnung (13, 14) versehen sind, deren Achse (22, 23) senkrecht zu der Verbindungsachse (21) der ersten Austrittsöffnungen (12) verläuft, **dadurch gekennzeichnet, dass** zum Anschluss der Rohrleitungen (3,4) dienende Verbindungsstücke (18, 19) außen und die Klauen (5, 10) innen mit formschlüssig ineinander greifenden Strukturen (24, 25) versehen sind um eine exakte Positionierung der Verbindungsstücke (18, 19) in den Klauen (5, 10) zu gewährleisten.

2. Befestigungsanordnung nach Anspruch 1, **dadurch gekennzeichnet, dass** die Verbindungsstücke (18, 19) als gerade, mit gegenüberliegenden Anschlussstutzen (26) versehene und als mit T-förmig angeordneten Anschlussstutzen versehene Formstücke ausgebildet sind.

3. Befestigungsanordnung nach Anspruch 1, **dadurch gekennzeichnet, dass** die Achse (22) einer der weiteren Durchtrittsöffnungen (13) der Klauen (5, 10) in der Befestigungsebene verläuft.

4. Befestigungsanordnung nach Anspruch 1, **dadurch gekennzeichnet, dass** die Achse (23) einer der weiteren Durchtrittsöffnungen (14) der Klauen (5, 10) senkrecht zur Befestigungsebene verläuft und die Durchtrittsöffnung (14) nach der von der Befestigungsfläche (1, 2) wegweisenden Seite geöffnet ist.

5. Befestigungsanordnung nach Anspruch 1, **dadurch gekennzeichnet, dass** die Klauen (10) mit Einsteckspießen (9) für eine Erdbefestigung versehen sind.

6. Befestigungsanordnung nach Anspruch 1, **dadurch gekennzeichnet, dass** die Klauen (5) mit seitlich abstehenden Befestigungslaschen zur Anordnung auf festem Untergrund (1) versehen sind.

## Claims

1. Fixing arrangement for a network of pipes, in particular for a watering system for plants, with holders for the pipes (3, 4) that are provided with claws (5, 6) open towards the fixing surface (1, 2) and positively gripping round the pipes (3, 4) and holding them in a fixing plane, where the claws (5, 10) are provided in addition to the two outlet openings (12) running in the direction of the pipe axis (21) with at least one further passage opening (13, 14) whose axis (22, 23) runs vertical to the connecting axis (21) of the first outlet openings (12), **characterized in that** connecting pieces (18, 19) serving to connect the pipes (3, 4) on the outside and the claws (5, 10) on the inside are provided with positively interlocking structures (24, 25) to ensure exact positioning of the connecting pieces (18, 19) in the claws (5, 10).

2. Fixing arrangement according to Claim 1, **characterized in that** the connecting pieces (18, 19) are designed as straight shaped sections provided with opposite connection sockets (26) and as shaped sections provided with connection sockets arranged in a T shape.

3. Fixing arrangement according to Claim 1, **characterized in that** the axis (22) of one of the further passage openings (13) of the claws (5, 10) runs in the fixing plane.

4. Fixing arrangement according to Claim 1, **characterized in that** the axis (23) of one of the further passage openings (14) of the claws (5, 10) runs vertical to the fixing plane and the passage opening (14) is opened towards the side facing away from the fixing surface (1, 2).

5. Fixing arrangement according to Claim 1, **characterized in that** the claws (10) are provided with insertion spikes (9) for ground fixing.

6. Fixing arrangement according to Claim 1, **characterized in that** the claws (5) are provided with laterally protruding fixing tabs for arrangement on hard surfaces (1).

## Revendications

1. Système de fixation pour un réseau de canalisations, en particulier pour un système d'arrosage de plantes, avec des attaches pour canalisations (3, 4) munies de pattes (5,10) ouvertes vers les surfaces de fixation (1,2), qui chevauchent en épousant leur forme les canalisations (3, 4) et les maintiennent dans un plan de fixation, sachant que les pattes (5, 10) comportent, outre les deux orifices de sortie (12) s'étendant dans le sens de l'axe (21) de la canalisation, au moins un orifice de passage (13, 14) supplémentaire dont l'axe (22, 23) est perpendiculaire à l'axe de jonction (21) des premiers orifices de sortie (12), **caractérisé en ce qu'**à l'extérieur, les pièces de jonction (18, 19) servant à raccorder les canalisations (3, 4), et à l'intérieur, les pattes (5, 10) sont munies de structures (24, 25) s'emboîtant géométriquement les unes dans les autres afin de garantir un positionnement précis des pièces de jonction (18, 19) dans les pattes (5,10).

2. Système de fixation selon la revendication 1, **caractérisé en ce que** les pièces de jonction (18, 19) sont des pièces moulées rectilignes avec des raccords (26) opposés et avec des raccords disposés en forme de T.

3. Système de fixation selon la revendication 1, **caractérisé en ce que** l'axe (22) d'un des orifices de passage (13) supplémentaires des pattes (5, 10) s'étend dans le plan de fixation.

4. Système de fixation selon la revendication 1, **caractérisé en ce que** l'axe (23) d'un des orifices de passage (14) supplémentaires des pattes (5, 10) s'étend perpendiculairement au plan de fixation et que l'orifice de passage (14) est ouvert du côté opposé à la surface de fixation (1, 2).

5. Système de fixation selon la revendication 1, **caractérisé en ce que** les pattes (10) sont munies de piquets (9) pour une fixation dans la terre.

6. Système de fixation selon la revendication 1, **caractérisé en ce que** les pattes (5) sont munies de brides de fixation faisant saillie latéralement pour une disposition sur un sol dur (1).
